# EUROPEAN PATENT APPLICATION

(11) **EP 4 443 605 A1**
(43) Date of publication of application: **09.10.2024**
(21) Application number: 23209619.8
(22) Date of filing: 14.11.2023
(51) Int. Cl.: H01M 10/613, H01M 10/625, H01M 10/6556, H01M 10/6561, H01M 50/204, H01M 10/42, H01M 50/249, H01M 50/284

(54) **BATTERY PACK AND UNMANNED AERIAL VEHICLE**

(30) Priority: 03.04.2023 CN 202310350988; 27.04.2023 WO PCT/CN2023/091214
(71) Applicant: Eve Energy Co., Ltd., Huizhou, Guangdong 516006 (CN)
(72) Inventor: HONG, Guoqiang, Huizhou, Guangdong (CN); LI, Zhimiao, Huizhou, Guangdong (CN); HUANG, Guojian, Huizhou, Guangdong (CN)
(74) Representative: Murgitroyd & Company

(57) **Abstract**

Disclosed a battery pack and an unmanned aerial vehicle. The battery pack includes a box assembly, a battery module and a control module. The box assembly includes a box. A battery module cabin is provided within the box. An air duct is provided within the box. The air duct is provided between adjacent battery module cabins. The battery module is installed within the battery module cabin. The battery module leans against a first side wall of the air duct. The control module is installed in the box. The control module leans against a second side wall of the air duct.

## Description

### FIELD

The present disclosure relates to the technical field of battery, and in particular to a battery pack and an unmanned aerial vehicle.

### BACKGROUND

A battery pack serves as a main power source in the field of unmanned aerial vehicle and can provide flight power for unmanned aerial vehicles. In related art, there are generally no heat dissipation measures and heat equilibrium measures for a battery of an unmanned aerial vehicle. Heat generated by rate discharge during operation of the battery cannot be dissipated in a timely manner, causing a temperature rise is too high. Thermal efficiencies of battery cores at different positions are different, causing a temperature difference is too big. This will cause a decrease in a cycle life of a battery and a decrease in a service life of a battery. For a battery that needs to be charged in a timely manner, an excessively high temperature requires waiting for the battery to cool before being charged, which undoubtedly limits normal use of an unmanned aerial vehicle.

Therefore, it is necessary to provide a battery pack and an unmanned aerial vehicle to improve the disadvantage.

### SUMMARY

Embodiments of the present disclosure provide a battery pack and an unmanned aerial vehicle, which may use air convection to dissipate heat of a battery, thereby solving a problem that the temperature rise of the battery pack during operation is high.

Embodiments of the present disclosure provide a battery pack, comprising:
a box assembly, including a box, in which multiple battery module cabins are provided within the box, the box is provided at least one air duct, and the air duct is provided between adjacent battery module cabins;
a battery module, installed within the battery module cabin, in which the battery module leans against a first side wall of the air duct; and
a control module, installed in the box, in which the control module leans against a second side wall of the air duct.

In one embodiment, a first thermal conductive adhesive is provided between the battery module and the first side wall. The first thermal conductive adhesive is used for adhering the battery module to the first side wall.

In one embodiment, the box assembly further includes a side plate. The battery module cabin is provided on a side surface of the box. The side plate is installed on the side surface of the box and covers the battery module cabin.

A second thermal conductive adhesive is provided between the battery module and the side plate. The second thermal conductive adhesive is used for adhering the battery module and the side plate.

In one embodiment, the battery module includes multiple battery cells. A surface of the battery cell is attached with a heat sink. The heat sink is in direct contact with the first thermal conductive adhesive and the second thermal conductive adhesive, respectively.

In one embodiment, the heat sink includes a main body and two flanges provided on two opposite sides of the main body. The main body is attached to a side surface of the battery cell which is close to or away from an adjacent battery cell. The flanges are attached to two opposite sides of the battery cell.

In one embodiment, a material of the heat sink is copper or aluminum.

In one embodiment, the battery module includes a bottom heat sink and multiple battery cells. The bottom heat sink is provided between the battery cell and a bottom of the box.

In one embodiment, the battery module includes a thermal insulating layer and multiple battery cells. The thermal insulating layer is adhered to a surface of a battery cell on an outermost side of the battery module.

In one embodiment, a material of the insulating layer is aerogel felt or foamed material.

In one embodiment, a thermal conductive member is provided between the control module and the second side wall. The thermal conductive member is in direct contact with the control module and the second side wall respectively.

In one embodiment, a control module includes a power distribution module, a battery management system, and a bracket assembly, at least part of the power distribution module and at least part of the battery management system are installed on both sides of the bracket assembly respectively. The bracket assembly is installed on top of the air duct.

In one embodiment, the bracket assembly includes a first bracket and a second bracket. The battery management system includes a battery management system host and a battery management system slave. The first bracket is connected to the second bracket. The power distribution module is installed on a side of the first bracket which is away from the second bracket. The battery management system host is installed on a side of the first bracket which is close to the second bracket. The battery management system slave is installed on a side of the second bracket which is close to the first bracket. The second bracket is installed on a top of the air duct.

In one embodiment, the power distribution module includes a DC/DC control board. The DC/DC control board is fixedly installed to the air duct. The DC/DC control board is in direct contact with the heat conductive member.

Embodiments of the present disclosure also provide an unmanned aerial vehicle. The unmanned aerial vehicle includes a battery pack as described above.

Advantageous effects of the present disclosure: in the present disclosure, a battery pack includes a box assembly, a battery module, and a power distribution module. The box assembly includes a box. Multiple battery module cabins are provided within the box. The box is provided with at least one air duct. The air duct is provided between adjacent battery module cabins. The battery module is installed within the battery module cabins. The power distribution module is installed within the box. By leaning the battery module against a first side wall of the air duct and leaning the control module against a second side wall of the air duct, heat generated by the battery module and the control module can be conducted to the box, air flow can be introduced into the air duct, and heat on the box is transferred into the environment by thermal convection, which can make heat generated by rate discharge during operation of the battery pack to be timely dissipated, prevents an temperature rise being too high, ensures that the battery pack can operate in a good operating temperature range, and being beneficial to improve working performance and service life of the battery pack.

### DESCRIPTION OF THE DRAWINGS

FIG. 1 is a structural schematic diagram of a battery pack according to some embodiments of the present disclosure.
FIG. 2 is an exploded view of a battery pack according to some embodiments of the present disclosure.
FIG. 3 is an exploded view of a box assembly according to some embodiments of the present disclosure.
FIG. 4 is a structural schematic diagram of a box according to some embodiments of the present disclosure.
FIG. 5 is an exploded view of a battery module according to some embodiments of the present disclosure.
FIG. 6 is an exploded view of a battery management system and a power distribution module according to some embodiments of the present disclosure.
FIG. 7 is a schematic diagram of an installation of a DC/DC control board according to some embodiments of the present disclosure.
FIG. 8 is a schematic diagram of a heat dissipation scheme according to some embodiments of the present disclosure.

The names of the components corresponding to the corresponding reference numerals in the figures are: 100- battery pack, 1- box assembly, 101- upper lid, 102- upper lid waterproof ring, 103- box, 1031- box frame, 1032- air duct, 1033- first support frame, 1034- cabins of battery management system and power distribution module, 1035- battery module cabin, 3104- side plate, 105- side plate waterproof ring, 106- lifting handle, 107- waterproof breathable valve, 108- power socket, 109- communication socket, 110- indicator lamp, 111- button switch, 112- push-and-pull handle, 2- battery module, 201- connecting-plate top insulating sheet, 202- connecting plate, 203-connecting-plate bottom insulating sheet, 204- battery buffer cotton, 205- battery cell, 206- heat sink, 207- thermal insulating layer, 208- module bottom buffer cotton, 209- insulating silica gel, 210- bottom heat sink, 211- first thermal conductive adhesive, 212- second thermal conductive adhesive, 3- battery management system, 301- battery management system host, 302- second support frame, 303- battery management system slave, 4- power distribution module, 401- pre-charge relay, 401- pre-charge resistor, 403- main negative relay, 404- bus-bar, 405- current divider, 406- insulating post, 407- main positive relay, 408- fuse, 409- insulating material, 410-DC/DC control board, 411- thermal conductive member, 5- bracket assembly, 501- first bracket, 502-second bracket, and 6- cable assembly.

### DETAILED DESCRIPTION

In the description of the present disclosure, unless otherwise expressly specified and limited, the terms "connected" and "fixed" should be understood in a broad sense. For example, it may be a fixed connection, a detachable connection, or integrated. It may be a mechanical connection or an electrical connection. It may be a direct connection, an indirect connection by means of an intermediate medium, an internal connection of two elements, or interacting relationship between two elements.

In the description of the present disclosure, unless otherwise expressly specified and limited, that a first feature is "on" or "under" a second feature may include that the first feature and the second feature are not directly in contact but rather by addition features therebetween. Moreover, that a first feature is "above" a second feature includes that the first feature is directly above and diagonally above the second feature, or merely indicates that the horizontal height of the first feature is greater than the horizontal height of the second feature. That a first feature is "below" a second feature includes that the first feature is directly below and diagonally below the second feature, or merely indicates that the horizontal height of the first feature is less than the horizontal height of the second feature.

In the description of the present embodiment, the terms "up", "down", "right", and other orientation or positional relationships are based on the orientation or positional relationships shown in the accompanying drawings, only for facilitating description and simplifying operation, and not to indicate or imply that the device or component referred to must have a specific orientation, be constructed and operated in a specific orientation. Therefore, it cannot be understood as a limitation of the present application. Furthermore, the terms "first" and "second" are used only for the purpose of distinguishing between description and have no special meaning.

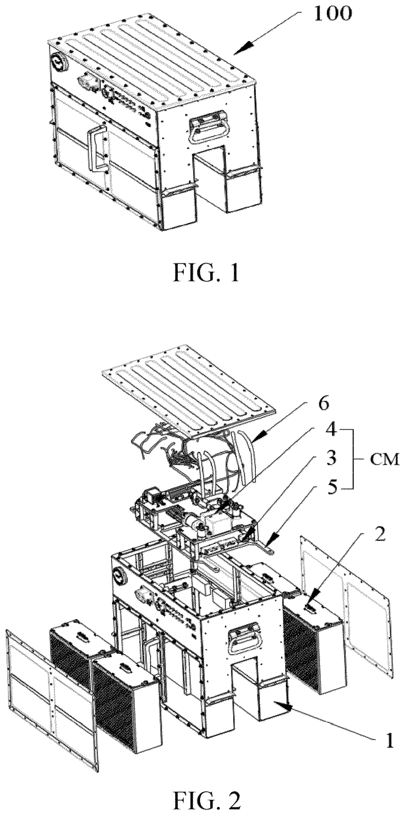

An embodiment of the present disclosure provides a battery pack. Referring to FIG. 1 and FIG. 2, a battery pack 100 includes a box assembly 1, a battery module 2, a control module CM, and a cable assembly 6. The box assembly 1 may be used for providing structural support. The box assembly 1 has an accommodating space inside. The control modules are all installed on the inner upper side of the box assembly 1. The battery pack 100 has multiple battery modules 2. The box assembly has multiple battery module cabins inside. The battery module 2 is installed within the battery module cabin.

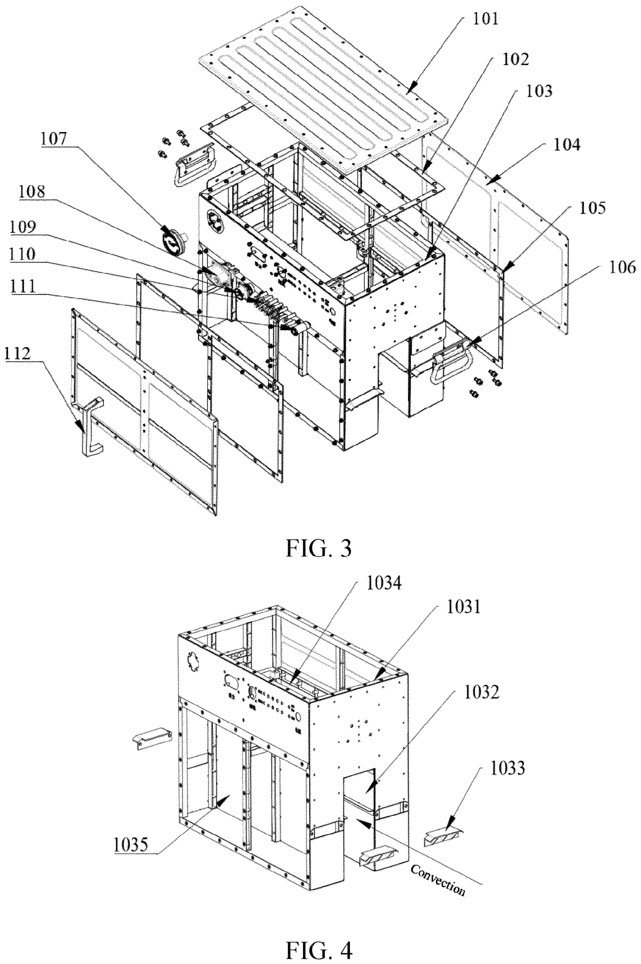

Referring to FIG. 3 and FIG. 4, the box assembly 1 includes a box 103. The box 103 may serve as the main body of the battery pack structure, and the remaining accessories may be fastened and fixed to the box 103 directly or indirectly by fasteners. Multiple battery module cabins 1035 are provided within the box 103. The box 103 is provided with at least one air duct 1032. The air duct 1032 is provided between adjacent battery module cabins 1035.

The box 103 includes a box frame 1031, an air duct 1032, and a first support frame 1033. The first support frame 1033 is fixed and installed to the box frame 1031 by a fastener. The air duct 1032 is provided in the middle below the box frame 1031. The battery module cabins 1035 are provided on two opposite sides below the box frame 1031. The air duct 1032 is provided between adjacent battery module cabins 1035.

In the present embodiment, the battery pack 100 has four battery modules 2. Four battery module cabins 1035 are correspondingly provided on two opposite sides below the box frame 1031. Each battery module 2 is fixed and installed within one corresponding battery module cabin 1035.

In the present embodiment, the battery module cabin 1035 is provided on the side surface of the box 103. As shown in FIG. 2 and FIG. 4, two openings are provided on each of the front and rear opposite side surfaces below the box frame 1031. The internal space exposed by the opening is in a hollow state. The internal space is the battery module cabin 1035. Two battery module cabins placed side by side are provided on each side of the air duct 1032. The battery module 2 may be installed in the battery module cabin 1035 through the openings on the front and rear opposite sides below the box frame 1031.

It should be noted that the number of the battery modules 2 included in the battery pack 100 may be selected according to actual requirements, and is not limited to 4 in the embodiments, but also may be 2 or more than 4, which is not limited herein. The number of the battery module cabins 1035 provided in the box 103 needs to match with the number of the battery modules 2. The number of the air ducts 1032 at the bottom of the box 103 may be set according to the number and arrangement of the battery module cabins 1035. The number of the air ducts 1032 is not limited to 1 in the present embodiment, but also may be 2 or more. When multiple air ducts 1032 are provided at the bottom of the box 103, the multiple air ducts 1032 may be provided side by side at intervals. The battery module cabins 1035 may be provided between the air ducts 1032 or on either side of the air ducts 1032.

Illustratively, the battery module 2 leans against the first side wall 10321 of the air duct 1032. The heat generated by the battery module 2 during operation can be conducted to the first side wall 10321, thereby dissipating the heat of the battery module 2 through the air duct 1032.

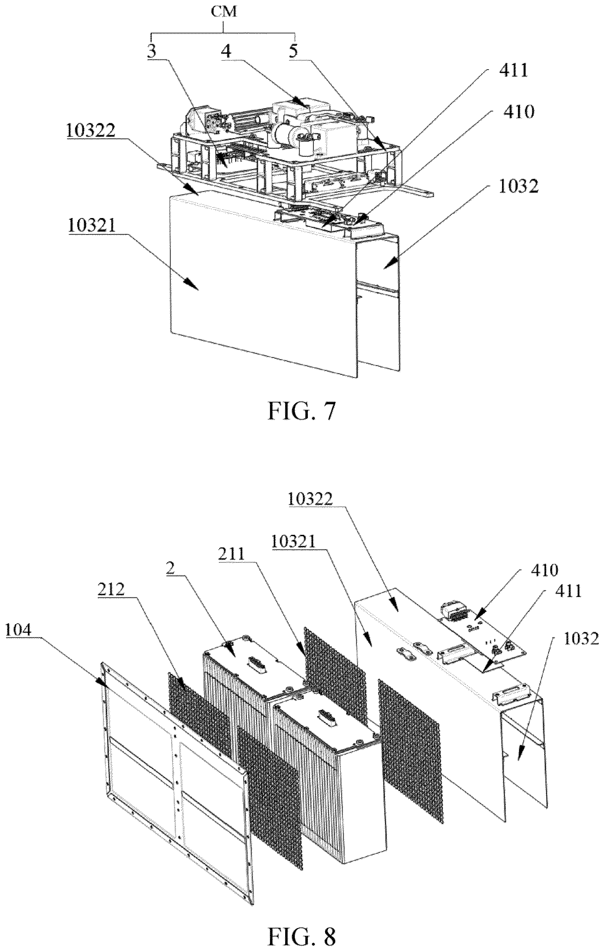

Referring to FIG. 8, in the present embodiment, a first thermal conductive adhesive 211 is provided between the battery module 2 and the first side wall 10321 of the air duct 1032. The first thermal conductive adhesive 211 is used for adhering the battery module 2 to the first side wall 10321 of the air duct 1032.

It should be noted that the battery pack according to the present embodiment may be applied to unmanned aerial vehicles or electric automobiles. Taking an unmanned aerial vehicle as an example, a battery pack may be used as a power source of the unmanned aerial vehicle, for providing flight power to the unmanned aerial vehicle. During flight of the unmanned aerial vehicle, the heat generated by the battery module 2 during operation can be conducted to the first side wall 10321 of the air duct 1032 by the first thermal conductive adhesive. The airplane platform can introduce airborne air flow into the air duct 1032. The heat on the first side wall 10321 of the air duct 1032 is introduced into the environment by heat convection, so that heat generated by the battery module 2 during operation can be discharged in time.

In the present embodiment, the material of the first thermal conductive adhesive 211 may be thermal conductive silica gel. The first thermal conductive adhesive 211 may be coated to the side wall of the air duct 1032 or the surface of the battery module 2 by spraying or sticking. Then the battery module 2 is adhered to the side wall of the air duct 1032.

Illustratively, as shown in conjunction with FIG. 3 and FIG. 8, the box assembly 1 further includes a side plate 104. The side plate 104 is installed to the side of the box 103 and covers the battery module cabin 1035. A second thermal conductive adhesive 212 is provided between the battery module 2 and the side plate 104. The second thermal conductive adhesive 212 is used for adhering the battery module 2 to the side plate 104. The heat generated by the battery module 2 during operation can be conducted to the side plate 104 by the second thermal conductive adhesive 212, so that the battery module 2 can be made to dissipate heat externally by the side plate 104.

In the present embodiment, the material of the second thermal conductive adhesive 212 may be thermal conductive silica gel. The second thermal conductive adhesive 212 may be applied to the surface of the side plate 104 adjacent to the battery module 2 or the surface of the battery module 2 by spraying or sticking, and then the battery module 2 is adhered to the side plate 104.

In the present embodiment, the box assembly 1 includes two side plates 104. The two side plates 104 are installed on the front side and the rear side of the box 103, respectively, and cover the battery module cabin 1035 and the battery module 2. The side plate 104 may be fastened to the box 103 by a fastener. A side plate waterproof ring 105 is provided between the side plate 104 and the box 103. After the side plate 104 is fastened to the box 103, the side plate waterproof ring 105 compresses under force, which can play a sealing and waterproof role.

Illustratively, referring to FIG. 3, the box assembly 1 further includes an upper lid 101. The upper lid 101 is installed above the box 103. The upper lid 101 may be fastened to the box 103 by a fastener. An upper lid waterproof ring 102 is provided between the upper lid 101 and the box 103. After the upper lid 101 is fastened to the box 103, the upper lid waterproof ring 102 compresses under force, which can play a sealing and waterproof role.

Illustratively, referring to FIG. 3, the box assembly 1 further includes a lifting handle 106, a waterproof breathable valve 107, a power socket 108, a communication socket 109, an indicator light 110, a push button switch 111, and a push-and-pull handle 112. The lifting handles 106 are provided on the left and right opposite sides of the box 103 respectively. The lifting handle 106 can be fastened to the box 103 by a fastener. The lifting handle 106 is used for the lifting of the handling process of the battery pack.

The waterproof breathable valve 107, the power socket 108, the communication socket 109, the indicator 110, and the push-button switch 111 are all installed on the front upper portion of the box 103, and are all fastened and fixed to the box 103 by fasteners. The waterproof breathable valve 107 is configured to balance the air pressure inside and outside the battery pack and quickly release the internal pressure. The power socket 108 is used for transport in positive and negative electrodes for charging and discharging of the battery pack. The communication socket 109 is used for communication and data transmission between the battery management system 3 of the battery pack and a host. The indicator lamp 110 is configured to indicate the operation state of the battery pack. The indicator lamp 110 may include 1 high-voltage output lamp, 1 fault lamp, 5 state-of-charge (SOC) lamps, and 5 state-of-health (SOH) lamps. The button switch 111 is configured to control the operation state of the battery pack. The operation state includes sleep, wake-up, power-off, and the like.

The push-pull handle 112 is fastened to the front side of the box 103 by a fastener. The push-pull handle 112 may be used for the push-pull positioning of the battery pack on a main cabin platform.

Illustratively, as shown in FIG. 7, the control module CM leans against the second side wall 10322 of the air duct 1032. The heat generated by the control module CM during operation can be conducted to the second side wall 10322, thereby dissipating the heat of the control module CM through the air duct 1032.

In the present embodiment, a thermal conductive member 411 is provided between the control module CM and the second side wall 10322 of the air duct 1032. The thermal conductive member 411 is in direct contact with the control module CM and the second side wall 10322 of the air duct 1032 respectively. The thermal conductive member 411 may be figured to conduct the heat generated by the control module CM during operation to the second side wall 10322 of the air duct 1032.

Illustratively, as shown in FIG. 7, the control module CM includes a battery management system 3, a power distribution module 4, and a bracket assembly 5. At least part of the power distribution module 4 and at least part of the bracket assembly 5 are installed on both sides of the bracket assembly 5 respectively. The bracket assembly is installed on top of the air duct 1032.

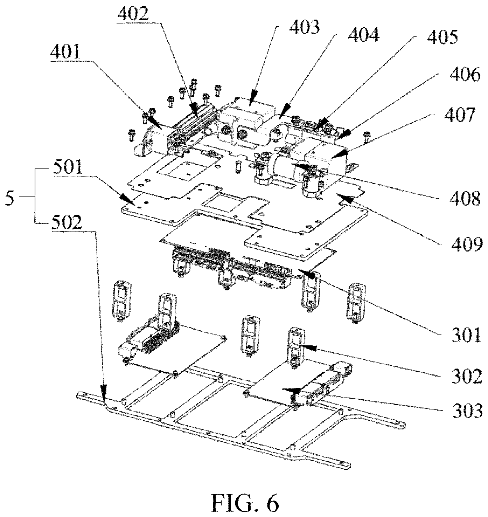

In the present embodiment, as shown in FIG. 6 and FIG. 7, the bracket assembly 5 includes a first bracket 501 and a second bracket 502. The battery management system 3 includes at least one battery management system host 301 and multiple battery management system slaves 303. The first bracket 501 is connected to the second bracket 502. The power distribution module 4 is installed on the side of the first bracket 501 which is away from the second bracket 502. The battery management system host 301 is installed on the side of the first bracket 501 which is close to the second bracket 502. The battery management system slaves 303 are installed on the side of the second bracket 502 which is close to the first bracket 501. The second bracket 502 is installed on top of the air duct 1032.

As shown in FIG. 7 and FIG. 8, in the battery pack 100 according to the present embodiment, the power distribution unit 404 is mainly used for on-off control of the charge-discharge main circuit of the battery pack. The power distribution unit (PDU) 4 includes a DC/CD control board 410. The DC/CD control board 410 is fixed and installed above the second side plate 10322 of the air duct 1032 by a fastener. The power supply input of the DC/DC control board 410 may be provided by the battery pack itself. The DC/DC control board 410 may convert the high voltage (low voltage) DC power supply output by the battery module 2 into a low voltage (high voltage) DC power supply. After the voltage conversion of the DC/DC control board 410, the power output by the battery module 2 is output to the battery management system 3. The operation state of the battery management system 3 is controlled by the push-button switch 111, such as sleep, wake up, and power-off.

The heat conductive member 411 is provided between the DC/DC control plate 410 and the second side wall 10322 of the air duct 1032, and is in direct contact with the DC/DC control plate 410 and the second side wall 10322 of the air duct 1032 respectively.

In the present embodiment, the main heat generating device in the DC/DC control board 410 is a DC/DC module and a diode. By providing the DC/DC control board 410 above the second side wall 10322 of the air duct 1032, the heat generated by the DC/DC module and the diode during operation can be conducted to the second side wall 10322 of the air duct 1032 by the heat conductive member 411. The air flow can be introduced into the air duct 1032 to introduce the heat on the box 103 into the environment by heat convection.

In the present embodiment, the thermal conductive member 411 may be a thermal conductive silica gel pad. In practical applications, the material of the thermal conductive member 411 is not limited to only silica gel, but also other insulating materials having good thermal conductivity, which is not limited uniquely herein.

Referring to FIG. 6, in the present embodiment, the power distribution module 4 further includes a pre-charge relay 401, a pre-charge resistor 402, a main negative relay 403, a bus bar 404, a current divider 405, an insulating post 406, a main positive relay 407, and a fuse 408. The upper surface of the first bracket 501 is attached with an insulating material 409. The pre-charge relay 401, the pre-charge resistor 402, the main negative relay 403, the bus bar 404, the current divider 405, the insulating post 406, the main positive relay 407, and the fuse 408 may be fixed and installed on the upper surface of the first bracket 501 by fasteners.

The total positive output of the battery modules 2 connected in series is connected to the fuse 408 via a cable. The fuse 408 is connected to the main positive relay 407 via the bus bar 404. The main positive relay 407 is connected to the power socket 108 via a cable. The total negative output of the battery modules 2 connected in series is connected to the current divider 405 via the cable assembly 5. The cable assembly 5 is connected to the main negative relay 403 via the bus bar 404. The main negative relay 403 is connected to the power socket 108 via the cable assembly 5. A series of the pre-charge relay 401 and the pre-charge resistor 402 is connected in parallel with the main positive relay 407, functioning as a capacitive load for pre-charging.

In the battery pack 100 according to the present embodiment, the battery management system 3 has following functions: sampling current, voltage, and temperature of the system; calculating and reporting battery pack state; controlling temperature of the battery pack; judging, processing, and reporting faults of the battery pack; a CAN communication function; supporting online debugging and upgrading; controlling the indicator light; controlling button switch and the like.

In the present embodiment, referring to FIG. 6 and FIG. 7, the battery management system 3 includes one battery management system host 301 and two battery management system slaves 303. The battery management system host 301 is fixed and installed below the first bracket 501 by a fastener. The battery management system slaves 303 is fixed and installed on the second bracket 502 by a fastener. The first bracket 501 and the second bracket 502 are fixed and installed together using a fastener via multiple second brackets 302. The battery management system 3 and the power distribution module 4 as a whole may be installed in the cabins of the battery management system and the power distribution module 1034 in the space above the box 103 using a fastener via threaded holes in four corners of the first support 501. In this way, the battery management system 3 and the power distribution module 4 can be integrated into one.

In the present embodiment, the battery management system 3 collects the single voltage and temperature of each battery module 2 via the cable assembly 6. The battery management system host 301 and the battery management system slave 303 perform communication and transmission via the cable assembly 6. At the same time, the battery management system 301 may collect temperatures of the positive electrode and the negative electrode of the power socket 108, the current divider 405, the pre-charge resistor 402, and the DC/DC module on the DC/DC control board 410.

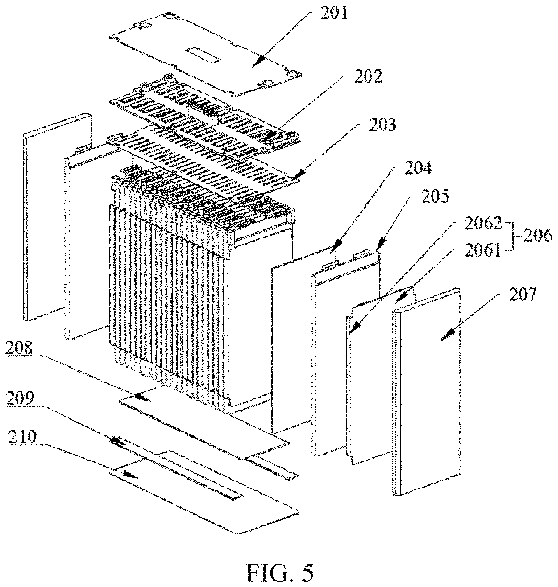

Illustratively, as shown in FIG. 5 and FIG. 8, the battery module 2 includes multiple battery cells 205. The surface of the battery cell 205 is attached with a heat sink 206. The heat sink 206 is in direct contact with the first thermal conductive adhesive 211 and the second thermal conductive adhesive 212 respectively.

In the present embodiment, the battery module 2 is mainly composed of a connecting-plate top insulating sheet 201, a connecting plate 202, a connecting-plate bottom insulating sheet 203, a battery buffer cotton 204, a battery cell 205, a heat sink 206, a thermal insulating layer 207, a module bottom buffer cotton 208, an insulating silica gel 209, and a bottom heat sink 210.

The battery cell 205 is an aluminum-plastic film soft-pack battery cell. The battery cell 205 may be stacked in a square shape perpendicular to the large side surface as shown. The surface of each battery cell 205 is attached with a sheet of heat sink 206 by double-sided adhesive tape. The material of the sheet of heat sink 206 may be copper or aluminum.

The heat sink 206 includes a main body 2061 and two flanges 2062. The flanges 2062 are provided on two opposite sides of the main body 2061. The flanges 2062 may be seen as formed by folding edges of two opposite sides of the main body 2061 by a certain angle. The included angle at the joint of the flanges 2062 and the main body 2061 may be, but is not limited to 90°. The whole of the heat sink 206 may have a U-shaped structure. The main body 2061 is attached to a side surface of the battery cell 205 which is close to or away from the adjacent battery cell. The flanges 2062 are attached to adjacent two side surfaces of the side surface of the battery cell 205 which is close to or away from the adjacent battery cell. The heat sink 206 can wrap the circumferential surface part of the battery cell 205. The heat generated by the battery cell 205 during operation is thermally conducted to the main body 2061 in the middle of the heat sink 206, and then conducted to the flanges 2062 on both sides of the heat sink 206.

Multiple battery cell 205 may be stacked in a square shape perpendicular to the large side surface as shown. The flanges 2062 of the heat sinks 206 located at two opposite side surfaces of the battery cell 205 are exposed, and are in direct contact with the first thermal conductive adhesive 211 and the second thermal conductive adhesive 212 respectively. The heat generated by the battery cell 205 during operation can be respectively conducted to the first thermal conductive adhesive 211 and the second thermal conductive adhesive 212 via the two flanges 2062 of the heat sink 206, and then respectively conducted to the air duct 1032 and side plate 104 via the first thermal conductive adhesive 211 and the second thermal conductive adhesive 212.

The material of the battery buffer cotton 204 is silica gel foam or EVA foam. A battery buffer cotton 204 is placed between each battery cell 205. The battery buffer cotton 204 and the battery cell 205 are adhered together by double-sided glue. The battery buffer cotton 204 may be used for vibration and impact buffering of the battery pack.

The material of the thermal insulating layer 207 is aerogel felt or foamed material. The foamed material may be polyimide, EVA, silica gel, or the like. The thermal insulating layer 207 is adhered to the surface of the outermost battery module 2 of the battery module 2. The thermal insulating layer 207 may be used for thermal insulation, whereby that the heat dissipation rates of the battery cells 205 located on the inner side and the outer side of the battery module 2 are consistent is ensured, thereby ensuring heat equilibrium between the battery cells.

A connecting plate 202 is provided above the battery cell 205. The connecting plate 202 is a printed circuit board. A connecting-plate bottom insulating sheet 203 is provided between the connecting plate 202 and the battery cell 205. The material of the connecting-plate bottom insulating sheet 203 is PP or PC. The lugs of multiple battery cells 205 pass through the predetermined openings of the connecting-plate bottom insulating sheet 203 the connecting plate 202, and are laser-welded by the copper bars on the connecting plate 202, realizing a parallel connection. The connection plate 202 is provided with a voltage and temperature collection output connector. The copper bar and the connection plate 202 are fixed by solder welding. The connection plate 202 is laid with an internal circuit to be connected to the welding hole of the connector.

The bottom buffer cotton 208 is provided in the middle of the bottom of the battery module 2. The insulating silica gel 209 is provided on both sides of the bottom of the battery module 2. Both the bottom buffer cotton 208 and the insulating silica gel 209 are used for the bottom buffer of the battery module.

The bottom heat sink 210 is provided between the battery cell 205 and the bottom of the box 103. The bottom heat sink 210 is in direct contact with the box 103. The bottom heat sink 210 and the battery cell 205 may be in direct contact or indirect contact. The material of the bottom heat sink 210 may be a metallic material such as copper or aluminum, or may be an insulating material having good thermal conductivity such as silica gel. The bottom heat sink 210 may be used for conducting the heat of the battery cell 205 during operation to the bottom of the box 103, so as to dissipate heat via the bottom of the box 103.

Illustratively, the battery pack further includes an insulating layer. The insulating layer is provided between the battery module 2 and the box assembly 1. The insulating layer can insulate the remaining part of the battery module 2 from the box assembly 1, whereby that the heat dissipation rates of the battery cells 205 located on the inner side and the outer side of the battery module 2 are consistent is ensured, thereby ensuring heat equilibrium between the battery cells.

According to the battery pack according to the above-described embodiment of the present disclosure, the embodiment of the present disclosure further provides an unmanned aerial vehicle. The unmanned aerial vehicle includes a fuselage and a battery pack. A battery cabin is provided on the fuselage. The battery pack is installed in the battery cabin. It should be noted that the battery pack included in the unmanned aerial vehicle according to the present embodiment may be the battery pack according to any one of the above-mentioned embodiments of the present disclosure. The particular structure of the battery pack may refer to the above-mentioned embodiments, and details are not described herein.

Advantageous effects of the present disclosure: in the present disclosure, a battery pack includes a box assembly, a battery module, and a power distribution module. The box assembly includes a box. multiple battery module cabins are provided within the box. At least one air duct is provided in the box. The air duct is provided between adjacent battery module cabins. The battery module is installed within the battery module cabin. The power distribution module is installed within the box. By leaning the battery module against a first side wall of the air duct and leaning the control module against a second side wall of the air duct, the heat generated by the battery module and the control module can be conducted to the box. The air flow can be introduced into the air duct to introduce the heat on the box into the environment by heat convection, so that the heat generated by the rate discharge during operation of the battery pack can be timely dissipated, preventing the temperature rise being too high, ensuring that the battery pack can operate in a good operating temperature range, and being beneficial to improve working performance and service life of the battery pack.

## Claims

1. A battery pack, comprising:
a box assembly, comprising a box, wherein a plurality of battery module cabins are provided within the box, the box is provided at least one air duct between adjacent battery module cabins;
a plurality of battery modules, installed in the plurality of battery module cabins respectively, and leaning against a first side wall of the air duct; and
a control module, installed in the box, and leaning against a second side wall of the air duct.

2. The battery pack according to claim 1, wherein a first thermal conductive adhesive is provided between the battery module and the first thermal conductive adhesive is configured to adhere the battery module with the first side wall.

3. The battery pack according to claim 2, wherein the box assembly further comprises a side plate installed on a side surface of the box and covering the battery module cabin that is provided on the side surface of the box;
wherein a second thermal conductive adhesive is provided between the battery module, and the second thermal conductive adhesive is configured to adhere the battery module with the side plate.

4. The battery pack according to claim 3, wherein the battery module comprises a plurality of battery cells attached with a heat sink that is in direct contact with the first thermal conductive adhesive and the second thermal conductive adhesive.

5. The battery pack according to claim 4, wherein the heat sink comprises a main body and two flanges on two opposite sides of the main body respectively; the main body is attached to a side surface of the battery cell close to or away from an adjacent battery cell, and the flanges are attached to adjacent two side surfaces of the side surface of the battery cell close to or away from an adjacent battery cell respectively.

6. The battery pack according to claim 4, wherein the heat sink is made of copper or aluminum.

7. The battery pack according to claim 1, wherein, each of the plurality of battery modules comprises a plurality of battery cells and a bottom heat sink between the battery cells and a bottom of the box.

8. The battery pack according to claim 1, wherein each of the plurality of battery modules comprises a plurality of battery cells and a heat insulating layer which is adhered to a surface of one battery cell at an outermost side of the battery module among the plurality of battery cells.

9. The battery pack according to claim 8, wherein a material of the insulating layer is aerogel felt or a foamed material.

10. The battery pack according to claim 1, wherein a thermal conductive member is provided between the control module and the second side wall, and the thermal conductive member is in direct contact with the control module and the second side wall.

11. The battery pack according to claim 10, wherein the control module comprises a bracket assembly installed on top of the air duct, a power distribution module and a battery management system, at least part of power distribution module is installed on one side of the bracket assembly, and at least part of the battery management system is installed on an other side of the bracket assembly.

12. The battery pack according to claim 11, wherein the bracket assembly comprises a first bracket and a second bracket which is installed on top of the air duct and connected to the first bracket; the battery management system comprises a battery management system host installed on a side of the first bracket which is close to the second bracket, and a battery management system slave installed on a side of the second bracket which is close to the first bracket; the power distribution module is installed on a side of the first bracket which is away from the second bracket.

13. The battery pack according to claim 11, wherein the power distribution module comprises a DC/DC control board which is fixed and installed to the air duct, and is in direct contact with the heat conductive member.

14. An unmanned aerial vehicle, comprising the battery pack according to any one of claims 1 to 13.
